# EUROPEAN PATENT APPLICATION

(11) **EP 2 784 739 A1**
(43) Date of publication of application: **01.10.2014**
(21) Application number: 11876190.7
(22) Date of filing: 24.11.2011
(51) Int. Cl.: G06Q 30/06

(54) **DELIVERY MANAGEMENT METHOD**

(71) Applicant: Amazon Technologies, Inc., Reno, NV 89507 (US)
(72) Inventor: KAWANO Yasushi, Ichikawa-City Chiba 272-0127 (JP); TANIGUCHI Shohei, Ichikawa-City Chiba 272-0127 (JP)
(74) Representative: Harris, Ian Richard
(86) International application number: PCT/JP2011/077033
(87) International publication number: WO 2013/076837

(57) **Abstract**

To provide a delivery management method that is based on resource conservation, energy conservation, ecology and the like. [Resolution Means] Host computers (10 and 20) that provide the steps of: selecting between a packaging mode using a cardboard box and a packaging mode using a return box that goes back and forth between a delivery destination and a product delivery center without the use of the cardboard box with regards to the packaging of a product when an order for a product is received from a terminal device (S103); assigning a return box and a pickup location of a delivery company in a zone that includes the delivery destination of the product when the packaging mode using the return box is selected using a selection screen (S111); stowing the product in the assigned return box at the product delivery center (S115); delivering the return box from the product delivery center (S 116); and returning the return box to the product delivery center after the return box has been delivered (S119).

## Description

### TECHNICAL FIELD

The present invention relates to a delivery management method that receives an order for a product such as a book, a DVD, an electronic device and the like through an Internet website and then delivers the product to a delivery destination.

### BACKGROUND ART

Open networks, as represented by the Internet, are spreading globally. Within Internet business, a mechanism that receives an order for a product such as a book, a DVD, daily sundry goods, an electronic device and the like through the Internet and then delivers the product to a delivery destination from a delivery center is widely used. A product that is not adequately covered by packaging material such as a book or a DVD is generally stowed in a cardboard envelope or a cardboard box (hereinafter referred to as a cardboard box) and delivered to the delivery destination from a product delivery center. Furthermore, a large electrical appliance and the like is already stowed in a sturdy cardboard box and is thus delivered to the delivery destination from the product delivery center as is.

A delivery label disclosing the delivery destination is affixed to the cardboard box and a delivery company carries the product from the product delivery center to the delivery destination based on the delivery label. More specially, the delivery company initially gathers the product sent from the product delivery center at a delivery company sorting center and then sorts the product at the sorting center by pickup location (business office). Furthermore, the delivery company ships the product to the pickup location from the sorting center and the product is delivered to the delivery destination from the pickup location. Patent Document 1 discloses an invention that relates to the delivery label.

### Documents of the Prior Art

### Patent Document

Patent Document 1: Japanese Unexamined Patent Application No. 2004-315116

### SUMMARY OF THE INVENTION

### PROBLEM TO BE SOLVED BY THE INVENTION

A cardboard box for delivering a product is required so that the product can be delivered to a delivery destination without being damaged. On the other hand, the product delivery center must incur the cost of the cardboard box and the delivery destination must go to the trouble of disposing of the cardboard box. Furthermore, from the perspective of resource utilization, consumers want a delivery management method that is based on resource conservation, energy conservation, ecology and the like.

### MEANS FOR SOLVING THE PROBLEM

The present invention is a delivery management system providing a terminal device of a purchaser and a host computer that connects to the terminal device through a communication line that delivers a product of an order by the purchaser from a product delivery center.

In a first delivery management method, the host computer provides a step of selecting between a packaging mode using a cardboard box and a packaging mode using a return box that goes back and forth between a delivery destination and the product delivery center without the use of the cardboard box with regards to the packaging of a product when an order for the product is received from the terminal device. The delivery management method, furthermore, provides the steps: of assigning a return box and a pickup location of a delivery company in a zone that includes the delivery destination of the product when the packaging mode using the return box is selected using a selection screen; stowing the product in the assigned return box at the product delivery center; delivering the return box from the product delivery center; and returning the return box to the product delivery center after the return box has been delivered.

A second delivery management method attaches a pickup location tag that records the pickup location to the return box during the assigning step and attaches a delivery destination tag that records the delivery destination to the product during the stowing step.

A third delivery management method prints the pickup location tag and the delivery destination tag at the same time using a printer for printing tags after the assigning step.

A fourth delivery management method provides a determining step that determines whether it is possible to deliver the product of the order by the purchaser using the return box. Furthermore, the fourth delivery management method proceeds from the determining step to the selecting step when it is possible to deliver using the return box.

An assigning step of a fifth delivery management method assigns the product to the return box based the storage location of the product at the product delivery center.

An assigning step of a sixth delivery management method also assigns the product to the return box based the size of the product.

In a seventh delivery management method, there is a first return box with a first width and a second return box with a second width larger than the first width for the return box, and an assigning step that also assigns the product to the first return box or the second return box based on the width of the product.

In an eighth delivery management method, there is a first return box for a heavy object and a second return box for a light object for the return box, and an assigning step that also assigns the product to the first return box or the second return box based on the weight of the product.

### EFFECT OF THE INVENTION

The delivery management method of the present invention is able to deliver a product directly to a pickup location using a return box and thus conserves resources, conserves energy and is ecological.

### BRIEF DESCRIPTION OF THE DRAWINGS

FIG. 1 is an overall configuration drawing of a delivery system from an order for a product through the Internet to delivery of the product.
FIG. 2 is a block diagram illustrating a configuration within a delivery management server 20.
FIG. 3 is a conceptual diagram of assigning means 125 assigning to a pickup location based on an address and the like of a delivery destination.
FIG. 4 is a conceptual diagram of the assigning means 125 assigning the delivery destination by pickup location and printing a pickup location tag and a delivery destination tag.
FIG. 5 is a flow chart from receipt of the order to delivery of a product BK using a cardboard box CB or a return box RB.
FIG. 6 is an example of a monitor screen for the input of the delivery destination and the selection of a packaging mode.
FIG. 7 is a flow chart from receipt of the order to delivery of the product to the delivery destination.
FIG. 8 is a conceptual diagram illustrating a step that packs the product BK in the cardboard box CB or the return box RB.
FIG. 9 is a perspective view of the return box RB.
FIG. 10 is a side view illustrating a state where products BK of different widths are stowed in the return box RB.
FIG. 11 (A) is a flow chart of a second embodiment. (B) is a flowchart of a third embodiment. (C) is a flow chart of a fourth embodiment.
FIG. 12 is a conceptual diagram of the second embodiment and thus a conceptual diagram of assigning means 125 assigning return boxes for pickup locations based on the addresses of the delivery destinations and the sizes of the products.

### MODE FOR CARRYING OUT THE INVENTION

### <First Embodiment>

### (Configuration of a Delivery System)

An embodiment of the delivery system according to the present invention is provided below.

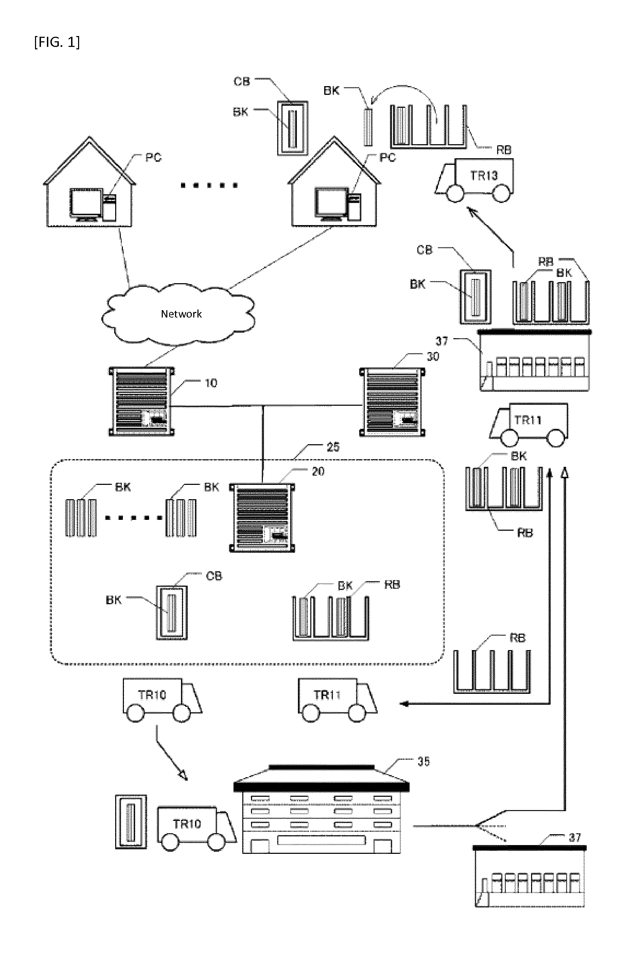

FIG. 1 is an overall configuration drawing of a delivery system from an order for a product through the Internet to delivery of the product according to a first embodiment.

As illustrated in FIG. 1, a delivery management server 20 according to the present embodiment is installed at a product delivery center (distribution center) 25. The delivery management server 20 is connected to an order receiving server 10 and, together with the order receiving server 10, takes on the role of a host computer. Furthermore, the delivery management server 20 is connected to a server 30 of a delivery company through the security of a password and the like.

The order receiving server 10 records a product description of a book, a DVD, an electronic device and the like, size (length width, lateral width and height) of a product BK, weight of the product BK and the price of the product. An ordering person submits an order for a product to the order receiving server 10 through the Internet using a mobile terminal, a PC or the like. The ordering person can select a delivery destination and packaging mode when ordering the product.

The server 30 of a delivery company stores a plurality of pickup locations (business offices) and the coverage areas supported by the pickup locations. The server 30 of a delivery company also stores a convenience store or a Kiosk for temporarily storing the product and the coverage area supported by the convenience store or Kiosk. The delivery management server 20 can accesses this information and store the information of the coverage area supported by the pickup location in a storage device of the delivery management server 20.

The product delivery center 25 provides an automated warehouse having a stacker crane and the like or shelves. The product delivery center 25 receives various products from publishers, record companies and manufacturers. The various products are stored in the automated warehouse or shelves and the like.

An ordered product BK is stowed in a cardboard box CB or a return box RB (circulation box). The cardboard box CB is shipped from the product delivery center 25, together with other products stowed in the cardboard box CB, by a truck TR10. Furthermore, the return box RB is shipped from the product delivery center 25, together with other products, by a truck TR11.

The cardboard box CB shipped by the truck TR10 is initially off loaded at a sorting center 35 of a delivery company. At the sorting center 35, the cardboard box CB is separated as addressed to pickup location 37 based on the delivery destination tag affixed to the cardboard box CB. The separated cardboard box CB is delivered to the pickup location 37 by the truck TR11. On the other hand, the return box RB is delivered directly to the pickup location 37 by the truck TR11 without passing through the sorting center 35.

The cardboard box CB or return box RB delivered to the pickup location 37 is delivered to the delivery destination by small truck TR13. The product BK stowed in the cardboard box CB is handed to a delivery destination receiving person while stowed in the cardboard box. The product BK stowed in the return box RB is taken out from the return box RB and handed to the delivery destination receiving person. The empty return box RB is returned to the product delivery center 25 through the pickup location 37.

Note that the truck TR11 can deliver the cardboard box CB or the return box RB to a convenience store or Kiosk for temporary storage instead of to the pickup location 37. The receiving person goes to the convenience store or Kiosk to pick up the cardboard box CB or the return box RB delivered to the convenience store or Kiosk. The product BK stowed in the cardboard box CB is handed to a delivery destination receiving person while stowed in the cardboard box. The product BK stowed in the return box RB is taken out from the return box RB and handed to the delivery destination receiving person. The empty return box RB is returned to the product delivery center 25 from the convenience store or Kiosk. In the present specification, the pickup location 37 is a concept that includes the convenience store or Kiosk.

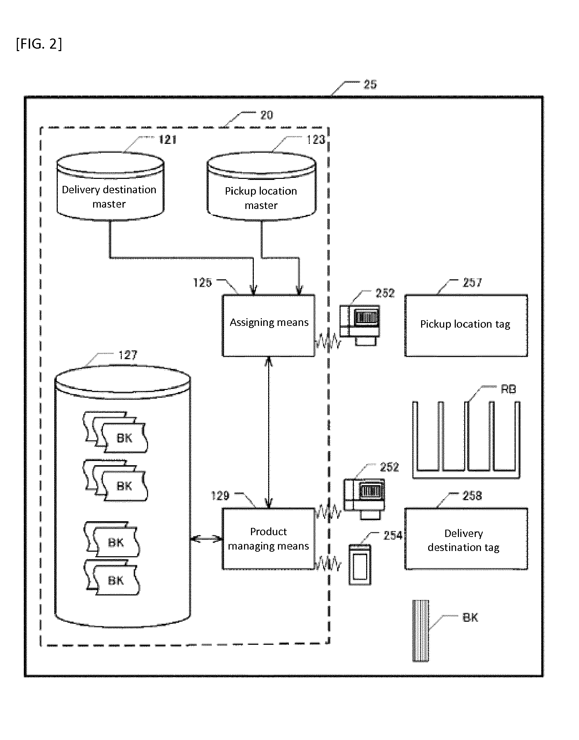

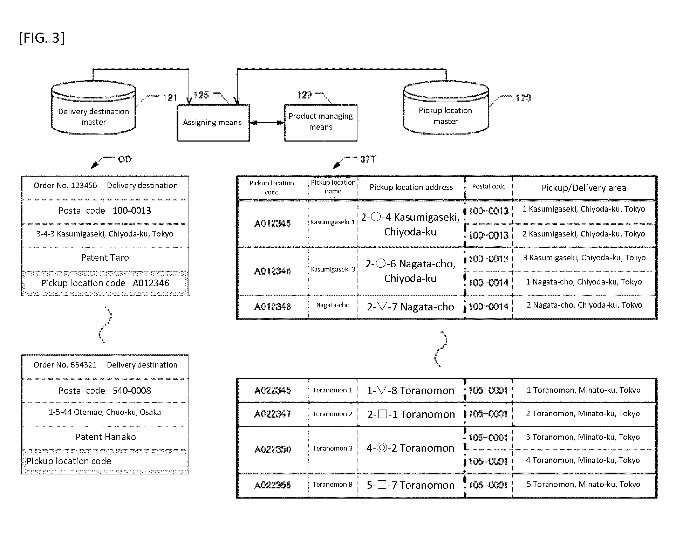

FIG. 2 is a block diagram illustrating a configuration within a delivery management server 20. The delivery management server 20 in the product delivery center 25 possesses delivery destination master data 121, pickup location master data 123 and product master data 127. The delivery destination master data 121 accumulates the order number, ordering person, ordered product and delivery destination data the delivery management server 20 receives from the order receiving server 10 (refer to FIG. 1). Furthermore, the pickup location master data 123 accumulates pickup location data related to the pickup location the delivery management server 20 receives from the server 30 of a delivery company (refer to FIG. 1). When there is a plurality of delivery companies, the pickup location master data 123 accumulates pickup location data by each delivery company. The assigning means 125 is connected to the delivery destination master data 121 and pickup location master data 123. The assigning means 125 is also connected to the product managing means 129. The processing performed by the assigning means 125 will be described later using FIG. 3.

Product master data 127 accumulates data of stocked products such as which storage locations the stocked products are in and how many stocked products exist. In other words, the product managing means 129 manages the product BK delivered to the product delivery center 25 from publishers and the like and the product BK shipped from the product delivery center 25.

The assigning means 125 and the product managing means 129 are tied to a label printer 252 by a communication line of a wireless LAN and the like. The label printer 252 prints a pickup location tag 257 having a barcode and the like or a product tag 258 having a barcode and the like. Furthermore, the product managing means 129 are tied to a tablet PC or a portable data terminal (hereinafter referred to as a PDT) 254 by a communication line of a wireless LAN and the like. The PDT 254 scans the pickup location tag 257 and the product BK product tag 258 and transmits the scanned data to the product managing means 129. The product managing means 129 manages the information that the product BK was removed from the product delivery center 25, the information that the product BK was stowed in the return box RB, the information that the product BK stowed in the return box RB was shipped from the product delivery center 25, and the information that the product BK is stored at the product delivery center 25.

FIG. 3 is a conceptual diagram of assigning means 125 assigning to a pickup location based on an address and the like of a delivery destination.

As illustrated on order display OD on the left side of FIG. 3, the delivery destination master data 121 stores both the delivery destination and the order number of the product BK. The delivery destination master data 121 stores a postal code of an area for delivery and the address and name or title of the delivery destination. The delivery destination master data 121 also has a region recorded by the pickup location code and the region is blank until the pickup location code is set. Furthermore, in the case of the delivery of the cardboard box CB described in FIG. 1, the region stored by the pickup location code is left blank.

On the other hand, as illustrated on delivery display 37T on the right side of FIG. 3, the pickup location master data 123 stores the pickup location code, pickup location name and pickup location address of the pickup location 37 of a certain delivery company. The pickup location master data 123 also records postal codes of the areas the pickup location 37 picks up from or delivers to and the delivery area. A delivery display 37T of the pickup location code for the pickup location 37 may be stored for each different delivery company.

The assigning means 125 compares the postal code or address of an area for delivery with postal codes and delivery areas of areas to which the pickup location 37 delivers. Then, the pickup location sets the pickup location 37 to which the product BK will be delivered. The pickup location code of the set pickup location 37 is recorded in the order display OD of the delivery destination master data 121. Note that the pickup location code of the pickup location 37 is stored in the order display OD when delivery is performed using the return box RB, and that the pickup location code is not stored when delivery is performed using the cardboard box CB.

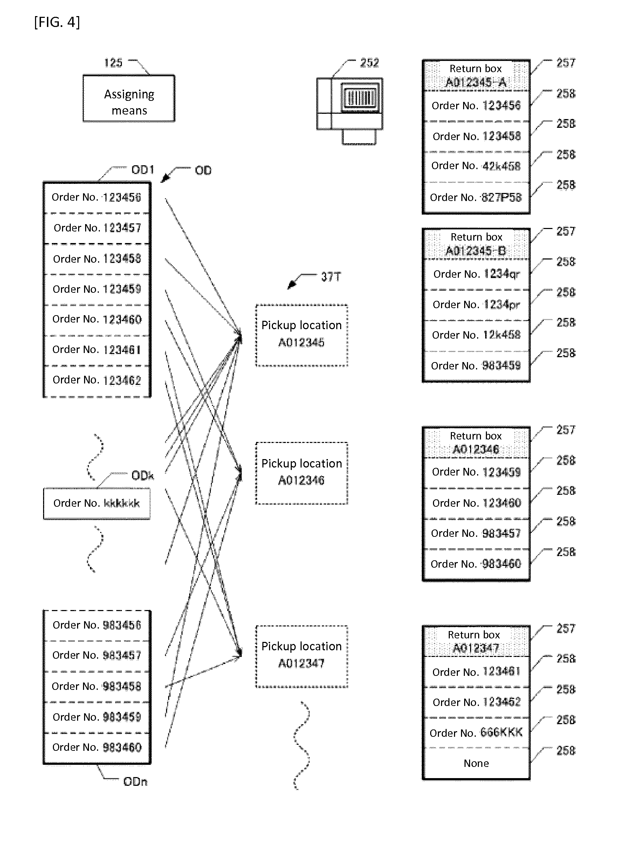

FIG. 4 is a conceptual diagram of the assigning means 125 assigning delivery destinations by pickup location and of the label printer 252 printing pickup location tags 257 and product tags 258.

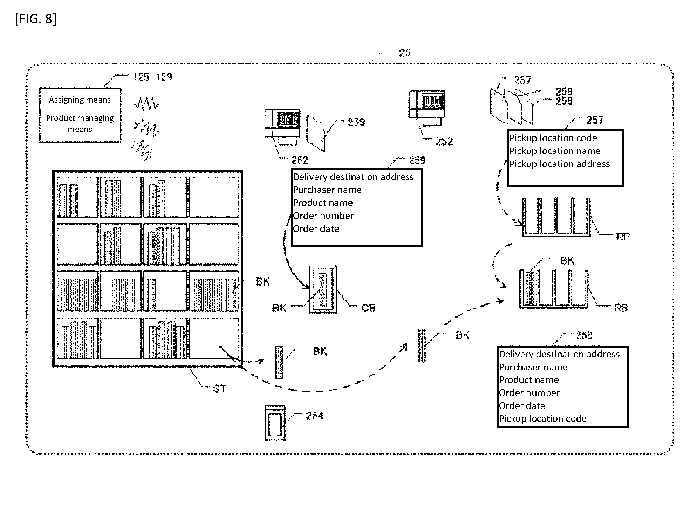

As illustrated in FIG. 4, the order display OD includes several thousands of or several tens of thousands of orders OD1 through ODn received in a day. The assigning means 125 assigns delivery destinations by each delivery area of the pickup location 37. For example, the return box RB can stow four of the products BK. Therefore, the assigning means 125 assigns four products BK to the return box RB. Furthermore, the label printer 252 prints one pickup location tag 257 and four product tags 258 on one sheet. The one pickup location tag 257 and four product tags 258 are stickers and can thus be peeled from the sheet. Printing as one sheet in this way allows an operator to confirm that four products BK are inside one return box RB. Of course, because the pickup location code is printed on the product tag 258, as described in FIG. 8, it is not required that one pickup location tag 257 and four product tags 258 be printed as one sheet.

A plurality of orders, for example eight orders, is sometimes included for one pickup location 37. In such a case, one other pickup location tag 257 and four product tags 258 are printed. In other words, there will be two return boxes RB for the same pickup location 37. Therefore, the assigning means 125 attaches symbols, such as "A" or "B," or numbers in the header or the footer of the pickup location code so as to enable differentiation between the two.

Furthermore, there are cases where only three of the products BK are listed on the order display OD for delivery to a given pickup location 37. In such a case, the assigning means 125 prints one other pickup location tag 257 and three product tags 258 by printing "None" on one of the product tags 258. The operator is able to confirm that there are three of the products BK inside without any concern that one of the product tags 258 did not print due to a printing failure and the like.

Note that the present embodiment is described based on the assumption that the order display OD displays one day's worth of orders. However, the assigning means 125 may process the order display OD twice a day or every two days and, furthermore, may process the order display OD in synch with the arrival time of the truck TR11 at the product delivery center 25 (refer to FIG. 1). Furthermore, there are cases where two or more of the same product BK are ordered. In such as case, the assigning means 125 may process the orders as one order or as two or more orders.

### (Delivery Management Method)

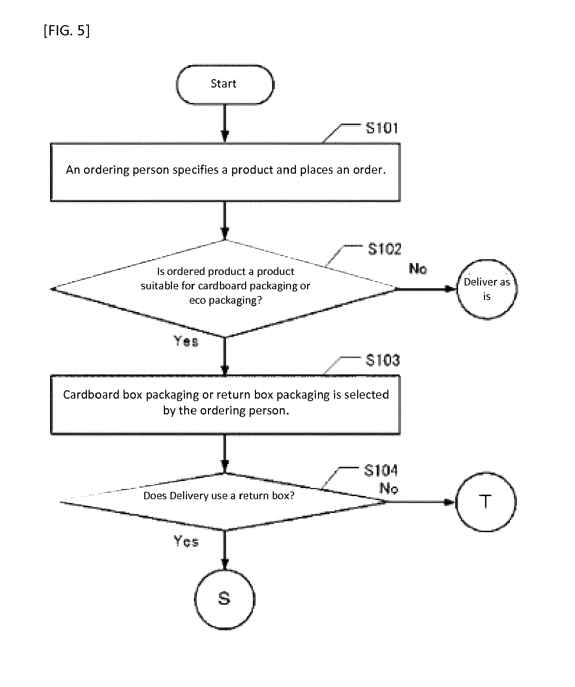

FIG. 5 is a flow chart from receipt of an order to delivery of the product BK using a cardboard box CB or a return box RB. In the flow chart, processing is done in the order receiving server 10 (refer to FIG. 1) until step S103 and step S104 is processed in the delivery management server 20.

In step S101 of FIG. 5, an ordering person submits an order for the product BK to the order receiving server 10 through the Internet using a mobile terminal or a PC and the like.

In step S102, the order receiving server 10 determines whether the ordered product BK is a product suited to a cardboard box CB or to a return box RB. For example, large appliances and furniture and the like will not fit in the cardboard box CB or the return box RB and thus large appliances are delivered as is in original stowage boxes or furniture is partially protected using cushioning material and then delivered as is. If it is possible to deliver the ordered product BK using the cardboard box CB or the return box RB, the method proceeds to step S103.

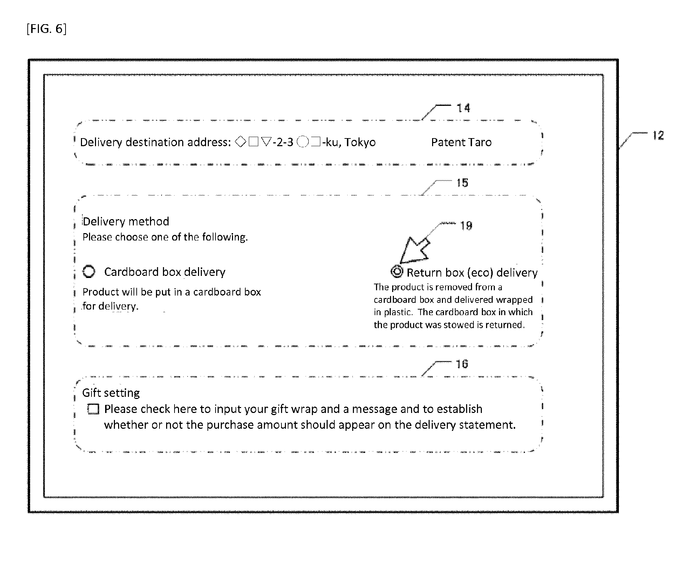

In step S103, the ordering person selects cardboard box delivery or return box delivery using a selection screen displayed on a monitor of the mobile terminal or the PC and the like. FIG. 6 is an example of a monitor screen 12 where the ordering person enters the delivery destination and selects the packaging mode.

As is illustrated in FIG. 6, delivery field 14 for entering the delivery destination, selection field 15 for selecting the packaging mode and request field 16 for requesting issuance of a gift setting or a receipt are displayed on the monitor screen 12. The ordering person enters the delivery destination to the delivery field 14 and selects a packaging mode from the selection field 15 using a mouse pointer 19 when placing a product order. The selection field 15 provides a display that allows the selection of either delivery using the cardboard box or the return box (eco) delivery. Delivery using the return box explains that the "The product is removed from a cardboard box and delivered wrapped in plastic. The cardboard box in which the product was stowed is returned." and describes the packaging mode thereof. The delivery destination and selected packaging mode entered to the order receiving server 10 are sent to the delivery management server 20 together with the order number, product information and the like.

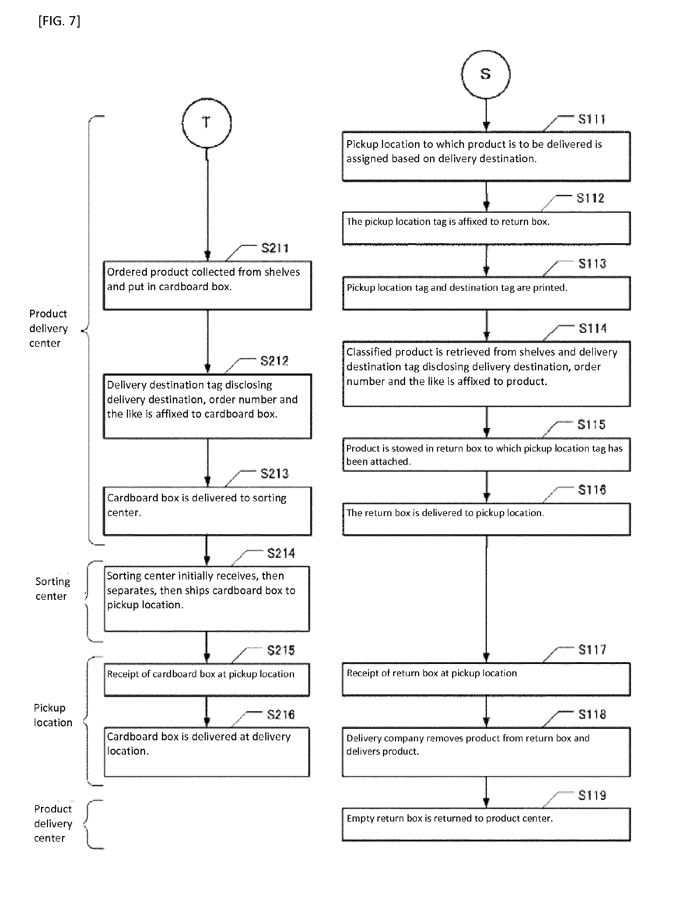

At step S104, the delivery management server 20 determines whether delivery of the ordered product will be delivery using the cardboard box CB or delivery using the return box RB. The method proceeds to "S" in FIG. 7 in the case of delivery using the return box RB or to "T" in FIG. 7 in the case of delivery using the cardboard box CB.

Delivery of the product BK using the cardboard box CB and delivery of the product BK using the return box RB are illustrated in FIG. 7 and FIG. 8 that are described next.

### (When Delivery using the Return Box is selected)

In step S111, the assigning means 125 assigns individual orders (ordered product data) by each delivering pickup location based on the delivery destination. As illustrated in FIG. 3, the pickup location code of the set pickup location 37 is recorded in the order display OD of the delivery destination master data 121. Furthermore, the product BK to be stowed in one return box RB is assigned, as illustrated in FIG. 4.

At step S 112, the label printer 252 prints the pickup location tag 257 and the delivery destination tag 258 for the pickup location 37 on one sheet, in accordance with instructions from the assigning means 125. FIG. 8 is a conceptual diagram illustrating a step that packs the product BK in the return box RB. As illustrated in FIG. 8, the pickup location code, pickup location name and pickup location address are printed on the pickup location tag 257. The shipping destination address for the product BK, name of the ordering person, product name, order number, order date and pickup location code are printed on the delivery destination tag 258. Note that a barcode (one dimensional code) or a QR code (registered trademark) (two dimensional code) is also printed on the pickup location tag 257 and the delivery destination tags 258 so that the order number, pickup location code and the like can be scanned by the PDT 254.

Note that it is preferred that four delivery destination tags 258 be printed in sequence either from the bottom or from the top so that the assigning means 125 can efficiently remove the product BK from the automated warehouse or a shelf ST at step S114. As illustrated in FIG. 2, the assigning means 125 is connected to the product managing means 129. The product managing means 129 manages the storage locations that indicate what products are stored on what shelves. Therefore, in order to efficiently remove the product BK from the automated warehouse or the shelf ST, the assigning means 125 searches for the shortest route for removing the product BK using an optimization algorithm of a travelling salesman method and the like. Furthermore, the label printer 252 prints the delivery destination tags 258 in sequence based on the shortest routes and the pickup location tag 257, in accordance with the results of the search by the assigning means 125.

At step S113, the printed pickup location tag 257 is peeled from the sheet and affixed, either automatically or by the operator, to the return box RB.

At step S114, the ordered product BK is removed, either automatically or by the operator, from the automated warehouse or the shelf ST. The PDT254 scans the barcode and the like of the product BK at this time. The information that the product BK was removed from the shelf ST is transmitted to the product managing means 129. Furthermore, after the PDT 254 scans the barcode and the like of the product BK, the product BK is wrapped in plastic so as not to get dirty. Then, the printed delivery destination tag 258 is affixed, either automatically or by the operator, to the wrapped product BK.

At step S115, the product BK to which the delivery destination tag 258 is affixed is stowed, either automatically or by the operator, in the return box RB. The pickup location tag 257 and the delivery destination tag 258 are scanned using the PDT 254 and the information of the product BK stowed in the return box RB is transmitted to the product managing means 129. As long as the return box RB can stow up to four of the products BK, a maximum of four of the products BK that match the pickup location tag 257 can be stowed in the return box RB.

At step S116, the return box RB stowing the product BK is delivered directly to the pickup location 37 from the product delivery center 25.

At step S 117, the pickup location 37 receives the return box RB from the product delivery center 25. The pickup location 37, unlike the sorting center 35 that mainly separates and sorts, is a business office that sends delivery products directly to delivery destinations from the pickup location 37 and also receives delivery products.

At step S118, the delivery company removes the product BK from the return box RB at the delivery destination and then delivers the product. Because only products BK for delivery areas of the pickup location 37 are in the return box RB, the delivery company delivers the product BK using the delivery destination tag 258 affixed to the wrapped product BK.

In step S119, the return box RB is empty after all of the products BK have been delivered to the delivery destination. The empty return box is returned to the product delivery center 25 through the pickup location 37. The product BK is once again stowed in the returned return box RB, which is then delivered to the pickup location 37 from the product delivery center 25.

### (When Delivery using the Cardboard Box is selected)

Next, the case when delivery using the cardboard box is selected will be described.

At step S211, the ordered product BK is removed, either automatically or by the operator, from the automated warehouse or the shelf ST. The PDT254 scans the barcode and the like of the product BK at this time. The information that the product BK was removed from the shelf ST is transmitted to the product managing means 129. After that, the product BK is stowed in the cardboard box CB.

In step S212, the printed delivery destination tag 259 is affixed, either automatically or by the operator, to the wrapped product BK. The shipping destination address for the product BK, name of the ordering person, product name, order number and order date are printed on the delivery destination tag 259. Unlike the delivery destination tag 258, the pickup location code is not printed on delivery destination tag 259. This is because the product of the cardboard box CB is not assigned by pickup location.

At step S213, the cardboard box CB stowing the product BK is delivered to the sorting center 35 from the product delivery center 25.

At step S214, the operator sorts the cardboard box CB at the sorting center 35. Then, the cardboard box CB is delivered to the pickup location 37 from the sorting center 35.

In step S215, the pickup location 37 receives the cardboard box CB from the sorting center 35.

In step S216, the delivery company delivers the cardboard box CB at the delivery destination. In general, the cardboard box CB that protected the product BK is not returned.

### <Configuration of the Return Box RB>

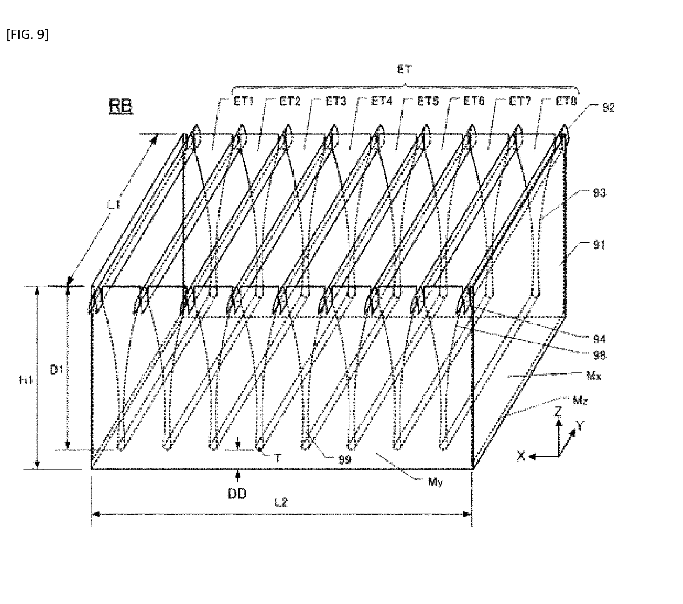

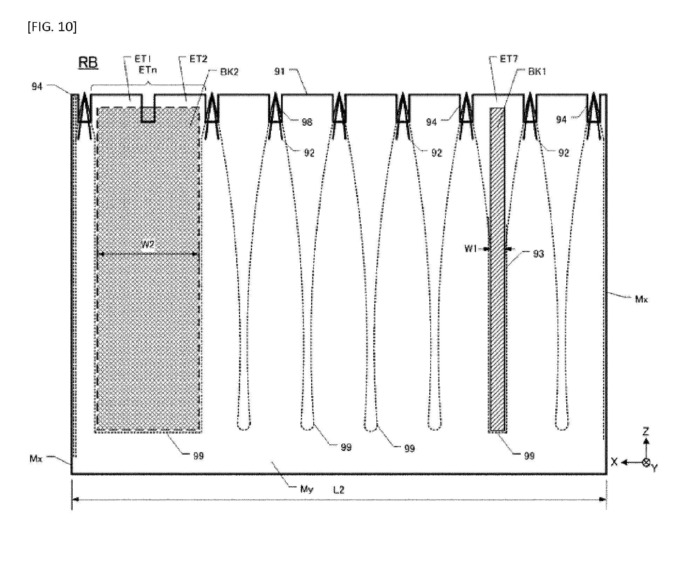

FIG. 9 is a perspective view illustrating an example of the return box RB. FIG. 10 is a side view illustrating a state where products BK of different widths are stored in the return box RB. The return box RB illustrated in FIG. 9 and FIG. 10 can stow up to 8 of the products BK that are narrow in width (X axis direction).

As illustrated in FIG. 9, the return box RB is configured from a box body 91, partitions 92 and a woven fabric 93. The box body 91 is made from cardboard or plastic, has an open top surface and is configured of a pair of first sidewalls My that face in the Y axis direction and a pair of second sidewalls Mx that face in the X axis direction and a bottom surface Mz that is perpendicular to the first sidewalls and the second sidewalls in the XY plane. Herein, for the box body 91, the length of the Y axis direction is L1, the length of the X axis direction is L2 and the height of the Z axis direction is H1.

Furthermore, nine pairs of concave notches 94 are formed in the upper sides of the pair of first sidewalls My. The return box RB provides nine long slender cardboard partitions 92 that correspond to the nine pairs of notches 94 formed in the box body 91. As illustrated in FIG. 10, the partitions 92 are formed by folding single flat boards in two with the lengths thereof being longer than the lengths L1 of the upper sides of the second sidewalls Mx. Furthermore, two pairs of locking parts that are concave in a lateral direction are formed in the vicinities of both ends of the partitions 92. The length facing in a longitudinal direction between the pair of locking parts is the same as the length L1 of the upper side of the second sidewall Mx. Therefore, when the partitions 92 are secured in the first side surfaces My, the locking parts formed in the partitions 92 fit with the pairs of notches 94 formed in the first sidewalls My.

The return box RB also provides a woven fabric 93 for stowing the product BK. The woven fabric 93 is made from a pair of paper or plastic sheets. The woven fabric 93 is formed into an accordion shape by alternating mountain folds 98 and valley folds 99. The mountain folds 98 and valley folds 99 are folded to length D1. In FIG. 9 and FIG. 10, the mountain folds 98 are folded linearly in inverted "V" shapes and the valley folds 99 are folded in curved lines in "U" shapes. The locations of the mountain folds 98 of the woven fabric 93 are hung on the partitions 92. Note that "mountain folds" indicate the ends folded on the +Z side and "valley folds" indicate the ends folded on the -Z side.

Furthermore, the length D1 (the height in the Z axis direction) of the folded woven fabric 93 is shorter than the height H1 of the box body 91 and thus the lowest points T of the valley folds 99 of the woven fabric 93 do not make contact with the bottom surface Mz of the box body 91. Furthermore, the difference (distance) between height H1 and length D1 forms a gap of DD.

As illustrated in FIG. 9, eight inlets ET1 through ET8 are formed in the spaces of the nine partitions 92. Products are inserted through these inlets ET1 through ET8 and the products are stowed in the woven fabric 93. FIG. 10 is a side view illustrating a state where, for example, products BK1 through BK2 are stowed in the return box RB. As illustrated in FIG. 10, the return box RB can stow the board like product BK1 and the wide product BK2.

First, when the board like product BK1 with a narrow width W1 such as a DVD and the like is inserted through inlet ET7, the product BK1 is sandwiched in the vicinity of a valley fold 99 of the woven fabric 93 and is thus stowed. A case where the product BK2 of width W2 that is wider than an inlet ET is to be inserted into the return box RB will be described in detail. Herein, the width W2 of the product BK2 in the X axis direction is equivalent to the width of two inlets ET. In such a case, the partition 92 between inlet ET1 and inlet ET2 is removed. Thus, inlet ET1 and inlet ET2 become one new, wide inlet ETn. On the other hand, there is one too many mountain folds 98 in the woven fabric 93. The excess mountain fold 98 is sandwiched between the second sidewall Mx on the left side of FIG. 10 and the partition 92 adjacent thereto.

### <Second Embodiment>

The assigning methods for the order display OD using the assigning means 125 of a second embodiment and the first embodiment are different. In other words, while the configuration of the second embodiment is the same as that of the first embodiment, the assigning method for the order display OD illustrated in FIG. 4 is different.

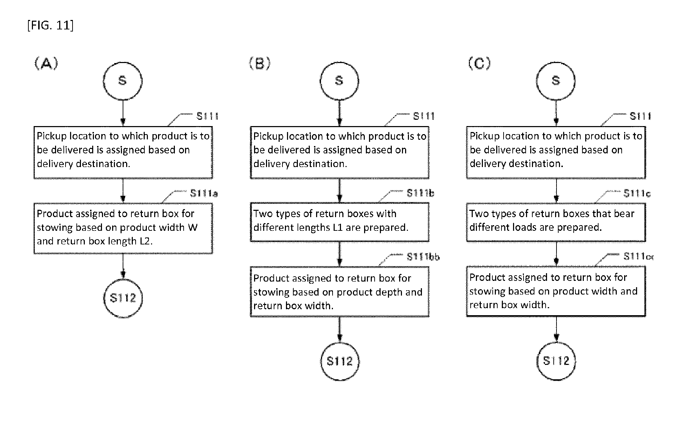

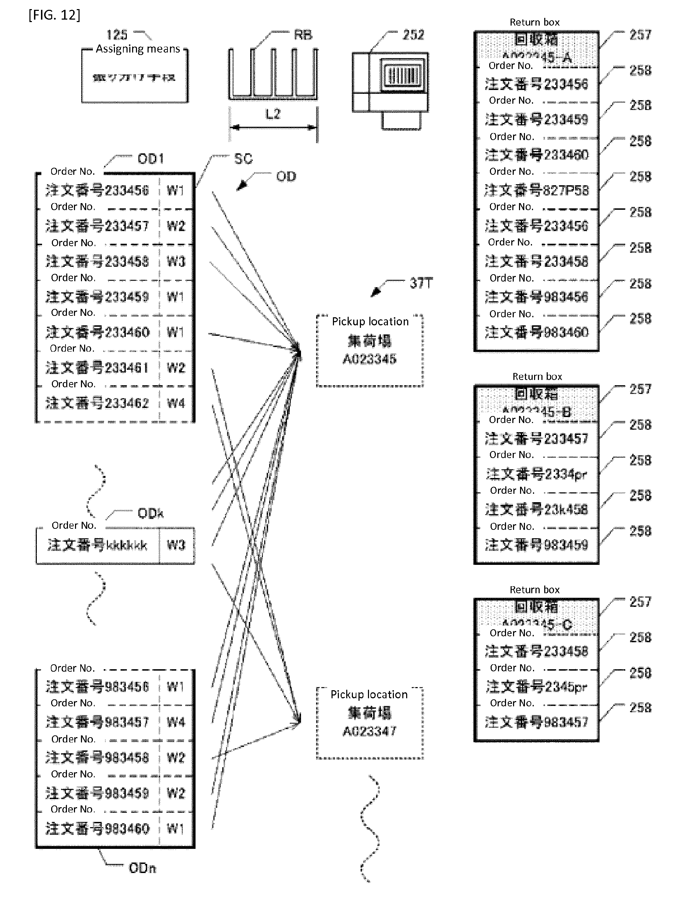

FIG. 11 (A) is a flowchart of the second embodiment and replaces step S111 illustrated in FIG. 7. FIG. 12 is a conceptual diagram of the assigning means 125 assigning return boxes for pickup locations based on the addresses of the delivery destinations and the sizes of the products.

The delivery destination master data 121 of the order display OD also stores the size (length width, lateral width and height) of the ordered product BK. A database of sizes of the product BK may be kept separately from the delivery destination master data 121.

First, at step S111, the assigning means 125 assigns the order display OD (ordered product data) by each delivering pickup location based on the delivery destination. Assume, for example, that 15 of the products BK are assigned to a certain pickup location.

Next, at step S111a, the assigning means 125 optimizes product combinations based on the size data of the products BK assigned to the certain pickup location so that the capacity of the return box RB can be used efficiently. Specifically, the assigning means 125 assigns products to be stowed in the return box RB based on widths W of the products BK and length L2 of the return box RB (refer to FIG. 9 and FIG. 10).

As illustrated in FIG. 12, the order display OD includes data on the sizes SC of the ordered products BK. In FIG. 12, widths W (W1 through W4) of the products are displayed as the sizes SC of the products BK. In the second embodiment, product width W1 is assumed to the same as width W1 of the product BK1 illustrated in FIG. 10 and product width W2 is assumed to be the same as width W2 of the product BK2 illustrated in FIG. 10. Furthermore, product width W3 is assumed to be 1.5 times the width W2 of the product BK2 and product width W4 is assumed to be twice the width W2 of the product BK2.

The assigning means 125 makes assignments so that all of the products BK can be stowed in the smallest number of return boxes RB. The assigning means 125 uses a combinatorial optimization algorithm to combine lengths L2 of the return boxes with widths W of the products BK. The combinatorial optimization algorithm is, for example, a genetic algorithm method or the travelling salesmen method.

The results of using the combinatorial optimization algorithm are illustrated on the right side of FIG. 12. Return box A023345-A has eight of the products BK with widths of W1. The label printer 252 prints one pickup location tag 257 and eight product tags 258 on one sheet. Furthermore, return box A023345-C has four of the products BK with widths of W2. The label printer 252 prints one pickup location tag 257 and four product tags 254 on one sheet. Furthermore, return box A023345-C has two of the products BK with widths of W3 and one of the products BK with a width of W4. The label printer 252 prints one pickup location tag 257 and three product tags 253 on one sheet. Not only is the operator able to confirm which products go in each return box RB but, due to the assignments therefor, is also able to keep the number of return boxes used to a minimum.

### <Third Embodiment>

The first embodiment and the second embodiment were described based on the assumption that there is one size of return box RB. A third embodiment uses two types of return boxes RB that are different sizes. The other configurations of the third embodiment are the same as the configurations of the second embodiment.

FIG. 11 (B) is a flow chart of the third embodiment.

At step S111, the assigning means 125 assigns the order display OD (ordered product data) by each delivering pickup location based on the delivery destination.

In step S111b, two types of return boxes, return box RB1 and return box RB2, having different lengths L1 (refer to FIG. 9), are prepared.

Next, at step S111bb, the assigning means 125 optimizes product combinations based on the size data of the products BK so that the two return boxes RB1 and RB2 can be used efficiently. For example, assume that one of the products BK is too big to be stowed in return box RB1 but can be stowed in return box RB2. Furthermore, the other four products BK can be stowed in return box RB1. In this case, the combinatorial optimization algorithm makes assignments so as to stow five of the products BK in return box RB2.

Though not illustrated in the figures, the label printer 252 prints one pickup location tag 257 and five product tags 258 on one sheet. Then, prints a symbol or number on the one pickup location tag 257 that represents the return box RB2 to be prepared. Not only is the operator able to confirm which return box RB to use but, due to the assignments therefor, is also able to keep the number of return boxes used to a minimum. Note that the return boxes RB may come in three or more sizes. The assigning means 125 makes assignments to optimize the sizes of the products BK with the sizes of three or more types of return boxes.

### <Fourth Embodiment>

The third embodiment uses two types of return boxes RB that are different sizes.

A fourth embodiment uses two types of return boxes RB which bear different loads. The other configurations of the fourth embodiment are the same as the configurations of the third embodiment. Not only is the size SC of the ordered products BK included in the order display OD but so is the weight data for the products BK.

FIG. 11 (C) is a flow chart of the fourth embodiment.

At step S111, the assigning means 125 assigns the order display OD (ordered product data) by each delivering pickup location based on the delivery destination.

In step S111c, two types of return boxes, return box RB3 and return box RB4, which bear different loads, are prepared. For example, return box RB4 having strong load bearing capabilities is made of reinforced plastic.

Next, at step S111cc, the assigning means 125 optimizes product combinations based on the weight data of the products BK assigned to the certain pickup location so that the two return boxes RB3 and RB4 can be used efficiently. For example, assume that one of the products BK is too heavy to be stowed in return box RB3 but can be stowed in return box RB4. Furthermore, the other four products BK can be stowed in return box RB3. In this case, the combinatorial optimization algorithm makes assignments so as to stow five of the products BK in return box RB4.

### DESCRIPTION OF THE NUMERICAL REFERENCES

- 10: Order receiving server
- 12: Monitor screen
- 20: Delivery management server
- 25: Product delivery center
- 30: Delivery company
- 35: Sorting center
- 37: Pickup location
- 91: Box body
- 92: Partition
- 93: Woven fabric
- 94: Notch
- 98: Mountain fold
- 99: Valley fold
- 121: Delivery destination master data
- 123: Pickup location master data
- 125: Assigning means
- 127: Product master data
- 129: Product managing means
- 252: Label printer
- 254: Portable data terminal
- 257: Pickup location tag
- 258: Product tag
- BK: Product
- CB: Cardboard box
- ET: Inlet
- OD: Order
- RB: Return box
- ST: Shelf
- TR: Truck

## Claims

1. A delivery management system providing a terminal device of a purchaser and a host computer that connects to the terminal device through a communication line that delivers a product of an order by the purchaser from a product delivery center, wherein the host computer provides the steps of:
selecting between a packaging mode using a cardboard box and a packaging mode using a return box that goes back and forth between a delivery destination and the product delivery center without the use of the cardboard box with regards to the packaging of a product when an order for the product is received from the terminal device;
assigning a return box and a pickup location of a delivery company in a zone that includes the delivery destination of the product when the packaging mode using the return box is selected using the selection screen;
stowing the product in the assigned return box at the product delivery center;
delivering the return box from the product delivery center; and
returning the return box to the product delivery center after the return box has been delivered.

2. The delivery management method according to Claim 1, wherein a pickup location tag that records the pickup location is attached to the return box during the assigning step, and
a delivery destination tag that records the delivery destination is attached during the stowing step.

3. The delivery management method according to Claim 2, wherein the pickup location tag and the delivery destination tag are printed at the same time using a printer for printing tags after the assigning step.

4. The delivery management method according to Claim 1 or Claim 2, wherein a determining step is provided that determines whether it is possible to deliver the order of the purchaser using the return box, and
proceeds to the selecting step when delivery is possible using the return box.

5. The delivery management method according to any one of Claims 1 through 5, wherein the assigning step assigns the product to the return box based on the storage location of the product at the product delivery center.

6. The delivery management method according to any one of Claims 1 through 5, wherein the assigning step also assigns the product to the return box based on the size of the product.

7. The delivery management method according to any one of Claims 1 through 6, wherein for the return box there is a first return box with a first width and a second return box with a second width larger than the first width, and
the assigning step also assigns the product to the first return box or the second return box based on the width of the product.

8. The delivery management method according to any one of Claims 1 through 6, wherein for the return box there is a first return box for a heavy object and a second return box for a light object, and
the assigning step also assigns the product to the first return box or the second return box based on the weight of the product.
